# EUROPÄISCHE PATENTSCHRIFT

(11) **EP 2 868 887 B1**
(45) Veröffentlichungstag und Bekanntmachung des Hinweises auf die Patenterteilung: **27.09.2017**
(21) Anmeldenummer: 14002480.3
(22) Anmeldetag: 17.07.2014
(51) Int. Cl.: F01N 13/00, F01N 3/20, F02B 77/08, G01M 15/10

(54) **Abgasnachbehandlungssystem mit Sensorbefestigungseinrichtung**
Exhaust gas treatment system with sensor fixating device
Système de post-traitement de gaz d'échappement et arrangement de montage de capteurs

(30) Priorität: 05.11.2013 DE 102013018450
(43) Veröffentlichungstag der Anmeldung: 06.05.2015
(60) Teilanmeldung: 15003021.1
(73) Patentinhaber: MAN Truck & Bus AG, 80995 München (DE)
(72) Erfinder: Winterhoff, Marc, 90461 Nürnberg (DE); Herrmann, Tobias, 90491 Nürnberg (DE)
(74) Vertreter: Liebl, Thomas

(56) Entgegenhaltungen:
- EP-A1- 1 674 683
- EP-A1- 2 551 483
- WO-A1-2014/117357
- DE-A1-102009 052 332

## Beschreibung

Die Erfindung betrifft ein Abgasnachbehandlungssystem, insbesondere für ein Strom- oder Pumpenaggregat oder ein Fahrzeug, z.B. ein Kraftfahrzeug, ein Nutzfahrzeug, wie etwa ein Omnibus oder ein Lastkraftwagen, ein Schiff, etc..

Im Stand der Technik sind Abgasnachbehandlungssysteme mit z. B. einem SCR-Katalysator-Modul (SCR: selective catalytic reduction; selektive katalytische Reduktion) und einem Reduktionsmittel-Modul bekannt. Das Reduktionsmittel-Modul dient zur Abgabe eines Reduktionsmittels (z.B. Harnstoff oder Harnstoff-Wasser-Gemisch) und zum Vermischen des Reduktionsmittels mit dem Abgas. Ferner sind im Stand der Technik Abgasnachbehandlungssysteme bekannt, bei denen der Montagewinkel zwischen dem SCR-Katalysator-Modul und dem Reduktionsmittel-Modul veränderbar ist, wodurch das Abgasnachbehandlungssystem an unterschiedliche Einbauräume, insbesondere unterschiedliche Einbaulagen anpassbar ist. Um solche Abgasnachbehandlungssysteme betreiben zu können, sind Abgassensoren, insbesondere Temperatursensoren und NOx-Sensoren erforderlich. Einbaurichtlinien oder Herstellervorgaben fordern für Temperatursensoren oftmals, dass die Temperatursensoren sich im Einbauzustand innerhalb eines Winkelbereichs von +/-90° zur Fahrzeugvertikalen erstrecken. Für NOx-Sensoren fordern Einbaurichtlinien oder Herstellvorgaben oftmals, dass die NOx-Sensoren sich innerhalb eines Winkelbereichs von +/-80° zur Fahrzeugvertikalen erstrecken. Damit soll insbesondere Korrosion durch Kondensateinlagerung in oder an den Sensoren vermieden werden. Problematisch an den Abgasnachbehandlungssystemen des Stands der Technik ist, dass diese zwar mittels des veränderbaren Montagewinkels an unterschiedliche Einbauräume, insbesondere unterschiedliche Einbaulagen, anpassbar sind, die Sensoren aber für manche Einbauräume oder Einbaulagen außerhalb der zuvor genannten Winkelbereiche liegen.

Aus der EP 1 674 683 A1 ist eine Abgasnachbehandlungsvorrichtung bekannt, bei der in ein Gehäuse eines Abgasnachbehandlungselementes beabstandet voneinander ein Oxidationskatalysator und ein Dieselpartikelfilter eingesetzt sind. Diese beiden Abgasreinigungselemente werden von einem ringförmigen Einsatz in Abstand gehalten. Dieser ringförmige Einsatz weist als Brücken bezeichnete Stege auf, denen Sensorbefestigungsabschnitte am Außengehäuse zugeordnet sind, sodass ein am Außengehäuse befestigter Sensor durch diese hindurch in den Innenraum des Gehäuses einragen kann. Der Fig. 9 dieser EP 1 674 683 A1 ist ein Aufbau zu entnehmen, bei dem am Gehäuse zwei Abgassensoren voneinander beabstandet angeordnet sind.

Weiter ist eine Abgasnachbehandlungseinrichtung aus der EP 2 551 483 A1 bekannt, die an einem Gehäuseabschnitt mehrere voneinander beabstandete Sensorelemente aufweist. Zur Befestigung der Sensorelemente sind am Gehäuseabschnitt Ansätze aufgeschweißt, durch die die Sensorelemente in das Innere des Gehäuseabschnitts einragen können.

Eine Aufgabe der Erfindung ist es, ein Abgasnachbehandlungssystem zu schaffen, dessen Variabilität in Bezug auf verschiedene Einbauräume und/oder Einbaulagen weiter verbessert werden kann.

Diese Aufgabe kann mit den Merkmalen des unabhängigen Anspruchs gelöst werden. Vorteilhafte Weiterbildungen der Erfindung können den Unteransprüchen und der folgenden Beschreibung entnommen werden.

Die Erfindung schafft ein Abgasnachbehandlungssystem, vorzugsweise für ein Fahrzeug, insbesondere ein Kraftfahrzeug, ein Nutzfahrzeug (z. B. ein Lastkraftwagen oder ein Omnibus) oder ein Schiff. Das Abgasnachbehandlungssystem kann insbesondere auch an einem Strom- oder Pumpenaggregat Anwendung finden.

Die Sensorbefestigungseinrichtung umfasst erfindungsgemäß ein im Wesentlichen ringförmiges (zum Beispiel im Wesentlichen kreisrundes oder hexagonales) Grundelement, an dessen Umfangsfläche die Sensorbefestigungsmittel ausgebildet sind. Die Sensorbefestigungseinrichtung ist somit vorzugsweise als Sensorring ausgeführt.

Das erfindungsgemäße Abgasnachbehandlungssystem umfasst zumindest ein Abgas-Modul, z. B. ein Katalysator-Modul, ein Partikelfilter-Modul und/oder ein Katalysator-Partikelfilter-Modul, mit einem Eingangsabschnitt und einem Ausgangsabschnitt. Das Abgasnachbehandlungssystem umfasst im Rahmen der Erfindung zur Abgasnachbehandlung somit vorzugsweise zumindest einen Abgas-Katalysator und/oder zumindest einen Abgas-Partikel-Filter.

Das erfindungsgemäße Abgasnachbehandlungssystem umfasst zumindest eine, vorzugsweise als Sensorring ausgeführte Sensorbefestigungseinrichtung, die zur Befestigung zumindest eines Abgassensors geeignet ist.

Die erfindungsgemäße Sensorbefestigungseinrichtung umfasst zumindest zwei, vorzugsweise zumindest drei voneinander beabstandete Befestigungsmittel, die zur Befestigung jeweils eines Abgassensors (Messaufnehmer) geeignet sind. Die Sensorbefestigungseinrichtung ist an dem Eingangsabschnitt und/oder dem Ausgangsabschnitt des Abgas-Moduls angeordnet. Hierzu eignet sich z. B. eine Schweiß- oder Schellenverbindung.

Als Abgassensoren kommen insbesondere ein Temperatursensor und/oder ein NOx-Sensor in Betracht. Die Befestigungsmittel sind insbesondere winkelmäßig voneinander beabstandet.

Die Befestigungsmittel werden nachfolgend als Sensorbefestigungsmittel bezeichnet. Die Sensorbefestigungsmittel stellen mögliche Befestigungsoptionen für einen oder mehrere Abgassensoren zur Verfügung.

Dadurch, dass mehrere winkelmäßig voneinander beabstandete Sensorbefestigungsmittel zur Verfügung gestellt sind, kann sichergestellt werden oder zumindest die Wahrscheinlichkeit erhöht werden, dass der oder die Sensoren im tatsächlichen Einbauzustand und/oder der tatsächlichen Einbaulage sich innerhalb eines gewünschten Winkelbereichs erstrecken.

Die Sensorbefestigungsbefestigungsmittel sind vorzugsweise winkelmäßig und/oder in Umfangsrichtung z. B. der Sensorbefestigungseinrichtung, des Eingangsabschnitts und/oder des Ausgangsabschnitts voneinander beabstandet und zwar insbesondere gleichmäßig.

Die Sensorbefestigungsmittel sind vorzugsweise um 60° +/-15° und/oder 120° +/-15° voneinander beabstandet.

Das Grundelement ist vorzugsweise ein separates Bauteil, das zur Montage an das Abgas-Modul und/oder Reduktionsmittel-Modul ausgeführt ist. Es sind allerdings ebenso Ausführungsformen möglich, in denen die Sensorbefestigungsmittel quasi direkt in das Abgas-Modul und/oder Reduktionsmittel-Modul eingearbeitet sind.

Die Sensorbefestigungsmittel sind vorzugsweise an der Umfangsfläche der Sensorbefestigungseinrichtung, insbesondere des Sensorrings ausgebildet.

Die Sensorbefestigungsmittel stellen zweckmäßig eine Durchlassöffnung zur Verfügung, über die eine Abgaserfassung (z. B. Temperaturmessung, NOx-Messung, etc.) mittels eines Abgassensors ermöglicht wird.

Die Sensorbefestigungsmittel können als Sensorbefestigungsstutzen ausgeführt sein.

Die Sensorbefestigungsmittel können z.B. zum Anschrauben eines Abgassensors ausgeführt sein und dafür z.B. eine Gewindeverbindung (z. B. ein Innen- oder Außengewinde) aufweisen.

Es ist möglich, dass die Sensorbefestigungsmittel, an denen kein Sensor befestigt wird, verschlossen sind, um ein Austreten von Abgas zu verhindern.

Es ist möglich, dass eine Sensorbefestigungseinrichtung an dem Eingangsabschnitt angeordnet ist und vorzugsweise zumindest drei Sensorbefestigungsmittel umfasst.

Es ist ebenfalls möglich, dass eine Sensorbefestigungseinrichtung an dem Ausgangsabschnitt angeordnet ist und vorzugsweise zumindest sechs Sensorbefestigungsmittel umfasst.

Es ist möglich, dass das Abgasnachbehandlungssystem ein Reduktionsmittel-Modul umfasst. Das Reduktionsmittel-Modul dient zur Abgabe des Reduktionsmittels an das Abgas und/oder zum Mischen des Abgases mit dem Reduktionsmittel.

Zur Abgabe des Reduktionsmittels an das Abgas kann das Reduktionsmittel-Modul z. B. eine Reduktionsmittel-Zufuhr-Einrichtung aufweisen, insbesondere eine Reduktionsmittel-Dosier-Einrichtung.

Zum Mischen des Abgases mit dem Reduktionsmittel kann das Reduktionsmittel-Modul z. B. eine Reduktionsmittel-Misch-Einrichtung aufweisen, insbesondere eine sogenannte Mischstrecke. Die Reduktionsmittel-Misch-Einrichtung kann z.B. mit einer Wärmedämmung versehen werden.

Das Reduktionsmittel ist vorzugsweise Harnstoff oder ein Harnstoff-Wasser-Gemisch.

Es ist möglich, dass eine Sensorbefestigungseinrichtung zwischen dem Reduktionsmittel-Modul und dem Abgas-Modul angeordnet ist. Alternativ oder ergänzend ist es möglich, dass eine Sensorbefestigungseinrichtung stromabwärts des Abgas-Moduls angeordnet ist.

Es ist möglich, dass die Sensorbefestigungseinrichtung zumindest einen Abgas-Temperatursensor und/oder zumindest einen Abgas-NOx-Sensor aufweist.

Die Sensorbefestigungseinrichtung am Eingangsabschnitt und/oder stromaufwärts des Abgas-Moduls kann z. B. einen Abgas-Temperatursensor aufweisen.

Die Sensorbefestigungseinrichtung am Ausgangsabschnitt und/oder stromabwärts des Abgas-Moduls kann z. B. einen Abgas-Temperatursensor und/oder einen Abgas-NOx-Sensor aufweisen.

Das Abgasnachbehandlungssystem ist vorzugsweise modular aufgebaut und umfasst, wie schon zuvor erwähnt, vorzugsweise ein Reduktionsmittel-Modul und ein Abgas-Modul. Vorzugsweise ist der Montagewinkel zwischen dem Reduktionsmittel-Modul und dem Abgas-Modul veränderbar. Ebenso ist es möglich, dass der Montagewinkel des Abgas-Moduls veränderbar ist. Dadurch, dass ein veränderbarer Montagewinkel vorgesehen ist, kann gewährleistet werden, dass das Abgasnachbehandlungssystem an unterschiedliche Einbauräume und/oder unterschiedliche Einbaulagen anpassbar ist.

Das Abgas-Modul kann z. B. einen Katalysator, einen SCR-Katalysator, vorzugsweise mit z. B. Ammoniak Sperrkatalysator, einen Oxidationskatalysator und/oder einen Partikel-Filter umfassen. Der Partikel-Filter ist vorzugsweise ein Dieselpartikelfilter.

Das Abgas-Modul kann folglich insbesondere als Katalysator-Modul, SCR-Katalysator-Modul, Oxidations-Katalysator-Modul, Partikel-Filter-Modul und/oder Katalysator-Partikelfilter-Modul bezeichnet werden.

Die Merkmale "Sensorbefestigungseinrichtung" und "Sensorbefestigungsmittel" sind im Rahmen der Erfindung zweckmäßig auszulegen als zur Befestigung zumindest eines Abgassensors geeignet. Im Rahmen der Erfindung kann, muss aber nicht zwangsläufig zumindest ein Abgassensor tatsächlich durch letztgenannte Merkmale befestigt sein.

Zu erwähnen ist insbesondere, dass dadurch, dass mittels den Sensorbefestigungsmitteln ein Abgassensor an unterschiedlichen Winkelpositionen montierbar ist oder mit anderen Worten die Sensorbefestigungsmittel winkelbezogen unterschiedliche Befestigungsoptionen bereitstellen, gewährleistet werden kann oder zumindest die Wahrscheinlichkeit erhöht werden kann, dass eine gewünschte oder z. B. gemäß Einbaurichtlinien oder Herstellervorgaben geforderte Sensorwinkelpositionierung eingehalten werden kann. Dadurch kann insbesondere Korrosion durch Kondensateinlagerung an oder in den Sensoren vermieden werden.

Zu erwähnen ist des Weiteren, dass die Sensorbefestigungseinrichtung vorzugsweise verdrehfest an oder im Abgasnachbehandlungssystem angeordnet ist. Sie kann einerseits festgeschweißt und/oder andererseits z. B. mittels einer Schelle fixiert sein.

Zu erwähnen ist darüber hinaus, dass die Sensorbefestigungseinrichtung zumindest vier, zumindest fünf oder sogar zumindest sechs Sensorbefestigungsmittel umfassen kann.

Zu erwähnen ist außerdem, dass die Sensorbefestigungsmittel unterschiedlich ausgeführt sein können, z. B. einerseits zur Befestigung einer ersten Sensor-Art (z. B. Temperatursensor) und andererseits zur Befestigung einer zweiten Sensor-Art (z. B. NOx-Sensor).

In einer bevorzugten Ausführungsform weist die Sensorbefestigungseinrichtung fünf Sensorbefestigungsmittel auf, wobei diese in zwei Gruppen gestaltet sind. Eine erste Gruppe bestehend aus drei Sensorbefestigungsmitteln dient zur Befestigung von NOx-Sensoren, eine zweite Gruppe bestehend aus zwei Sensorbefestigungsmitteln dient zur Befestigung von Temperatursensoren wobei die zwei Sensorbefestigungsmittel für die Temperatursensoren an der ringartig ausgebildeten Sensorbefestigungseinrichtung diametral gegenüberliegenden angeordnet sind, bzw. um 180° zueinander versetzt an der ringartigen Sensorbefestigungseinrichtung angeordnet sind. Hingegen ist die erste Gruppe der drei Sensorbefestigungsmittel für die NOx-Sensoren um 120° zueinander versetzt. Damit wird eine Sensoranordnung erreicht, die sowohl den Nöten der Temperatursensoren als auch der NOx-Sensoren gerecht wird und eine möglichst geringen Material und Fertigungsaufwand für die Sensorbefestigungsmittel erfordert. Besonders bevorzugt sind die fünf Sensorbefestigungsmittel an der ringartigen Sensorbefestigungseinrichtung punktsymmetrisch zum Zentrum der ringartigen Sensorbefestigungseinrichtung angeordnet.

Die Erfindung ist nicht auf ein Abgasnachbehandlungssystem beschränkt, sondern umfasst auch ein Fahrzeug (z.B. ein Kraftfahrzeug, ein Nutzfahrzeug (z.B. ein Lastkraftwagen oder ein Omnibus), ein Schiff, etc.) mit einem Abgasnachbehandlungssystem, wie hierin beschrieben.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht eines Abgasnachbehandlungssystems gemäß einer Ausführungsform der Erfindung,
- Figur 2: zeigt eine perspektivische, vergrößerte Ansicht eines Teils des Abgasnachbehandlungssystems der Figur 1,
- Figur 3: zeigt eine Frontalansicht eines Teils des Abgasnachbehandlungssystems der Figuren 1 und 2,
- Figur 4: zeigt eine Frontalansicht des Abgasnachbehandlungssystems der Figuren 1 bis 3, und
- Figur 5: veranschaulicht Winkeleinbaubereiche für Abgassensoren.

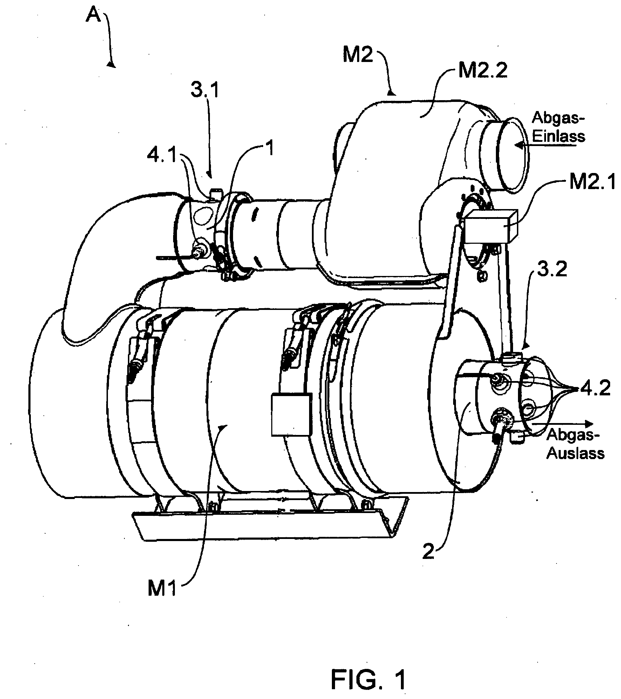

Figur 1 zeigt eine perspektivische Ansicht eines Abgasnachbehandlungssystems A für ein Fahrzeug gemäß einer Ausführungsform der Erfindung.

Das Abgasnachbehandlungssystem A umfasst ein Abgas-Modul M1, insbesondere ein SCR-Katalysator-Modul (Selective Catalytic Reduction; selektive katalytische Reduktion), und ein Reduktionsmittel-Modul M2. Das Abgas-Modul M1 wird nachfolgend als Katalysator-Modul M1 bezeichnet. Das Reduktionsmittel-Modul M2 umfasst eine schematisch dargestellte Reduktionsmittel-Abgabe-Einrichtung M2.1 (z. B. eine Reduktionsmittel-Dosierungs-Einrichtung) zur Abgabe des Reduktionsmittels an das Abgas und eine Misch-Einrichtung M2.2 (z. B. eine Mischstrecke) zum Vermischen des Abgases mit dem Reduktionsmittel. Das Reduktionsmittel ist vorzugsweise Harnstoff oder ein Harnstoff-Wasser-Gemisch. Das Katalysator-Modul M1 und das Reduktionsmittel-Modul M2 sind mittels Flanschverbindungen miteinander verbunden.

Das Katalysator-Modul M1 umfasst einen Eingangsabschnitt 1 und einen Ausgangsabschnitt 2. Am Eingangsabschnitt 1 ist üblicherweise nur ein Abgas-Temperatur-Sensor zur Abgas-Temperatur-Messung erforderlich, während am Ausgangsabschnitt 2 üblicherweise ein Abgas-Temperatur-Sensor zur Abgas-Temperatur-Messung und ein Abgas-NOx-Sensor zur Abgas-NOx-Messung erforderlich sind.

An dem Eingangsabschnitt 1 des Katalysator-Moduls M1 ist eine zweckmäßig ringförmige Sensorbefestigungseinrichtung 3.1 angeordnet, die drei voneinander beabstandete Sensorbefestigungsmittel 4.1 umfasst. Die Sensorbefestigungsmittel 4.1 stellen insbesondere für einen Temperatur-Sensor drei mögliche Festmachpositionen zur Verfügung.

Die Sensorbefestigungsmittel 4.1 sind in Umfangsrichtung der Sensorbefestigungseinrichtung 3.1 um 120° gleichmäßig voneinander beabstandet. In Abhängigkeit von der Einbaulage des Abgasnachbehandlungssystems A ist zumindest ein Sensorbefestigungsmittel 4.1 in einem gewünschten Winkelbereich von üblicherweise +/- 90° zur Fahrzeugvertikalen, sofern es sich um einen Abgas-Temperatursensor handelt. In oder an das Sensorbefestigungsmittel 4.1, das in den gewünschten Winkelbereich fällt, ist der Sensor zu befestigen. Die übrigen Sensorbefestigungsmittel 4.1 bleiben sensorfrei, allerdings verschlossen, um einen Abgasaustritt zu verhindern.

Anwendungsabhängig kann die Sensorbefestigungseinrichtung 3.1 mit mehr als drei Sensorbefestigungsmitteln 4.1 versehen werden.

An dem Ausgangsabschnitt 2 des Katalysator-Moduls M1 ist eine zweckmäßig ringförmige Sensorbefestigungseinrichtung 3.2 angeordnet, die sechs voneinander beabstandete Sensorbefestigungsmittel 4.2 umfasst.

Drei Sensorbefestigungsmittel 4.2 sind zur Befestigung einer ersten Sensor-Art (z. B. Temperatur-Sensor) ausgeführt und stellen hierfür drei mögliche Festmachpositionen zur Verfügung. Die Sensorbefestigungsmittel 4.2 sind in Umfangsrichtung der Sensorbefestigungseinrichtung 3.2 um 120° gleichmäßig voneinander beabstandet.

Drei Sensorbefestigungsmittel 4.2 sind zur Befestigung einer zweiten Sensor-Art (z. B. Abgas-NOx-Sensor) ausgeführt und stellen hierfür drei mögliche Festmachpositionen zur Verfügung. Die Sensorbefestigungsmittel 4.2 sind in Umfangsrichtung der Sensorbefestigungseinrichtung 3.2 um 120° gleichmäßig voneinander beabstandet.

Die Sensorbefestigungsmittel 4.2 zur Befestigung der ersten Sensor-Art und die Sensorbefestigungsmittel 4.2 zur Befestigung der zweiten Sensor-Art sind unterschiedlich ausgebildet.

Die Sensorbefestigungsmittel 4.2 zur Befestigung der ersten Sensor-Art sind in Umfangsrichtung der Sensorbefestigungseinrichtung 3.2 um 60° von den Sensorbefestigungsmitteln 4.2 zur Befestigung der zweiten Sensor-Art beabstandet.

In Abhängigkeit von der Einbaulage des Abgasnachbehandlungssystems A liegt zumindest ein Sensorbefestigungsmittel 4.2 in einem gewünschten Winkelbereich von üblicherweise +/- 90° zur Fahrzeugvertikalen, sofern es sich um einen Abgas-Temperatursensor handelt. In Abhängigkeit von der Einbaulage des Abgasnachbehandlungssystems A liegt zumindest ein Sensorbefestigungsmittel 4.2 in einem gewünschten Winkelbereich von üblicherweise +/- 80° zur Fahrzeugvertikalen, sofern es sich um einen NOx-Sensor handelt. In oder an das Sensorbefestigungsmittel 4.2, das in den gewünschten Winkelbereich fällt, sind der Temperatur-Sensor und der NOx-Sensor zu befestigen. Die übrigen Sensorbefestigungsmittel 4.2 bleiben sensorfrei, allerdings verschlossen, um einen Abgasaustritt zu verhindern.

Anwendungsabhängig kann die Sensorbefestigungseinrichtung 3.2 mit mehr oder weniger als drei Sensorbefestigungsmitteln 4.2 versehen werden.

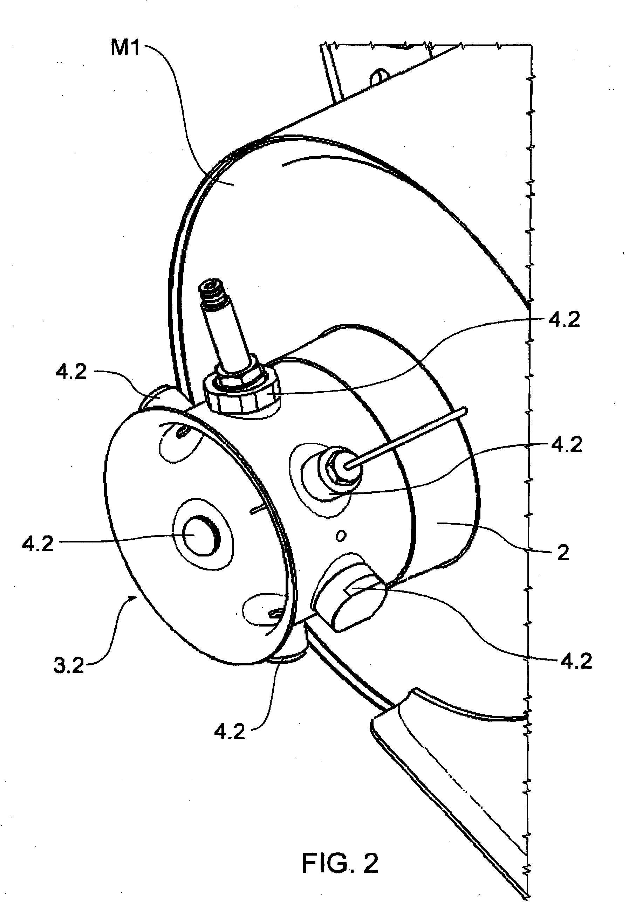

Figur 2 zeigt eine vergrößerte Ansicht der Sensorbefestigungseinrichtung 3.2 mit den Sensorbefestigungsmitteln 4.2. Figur 2 zeigt insbesondere, dass die Sensorbefestigungsmittel 4.2 als Sensorbefestigungsstutzen mit nicht zu sehendem Innengewinde zum Anschrauben der Abgassensoren ausgeführt sind. Figur 2 zeigt außerdem, dass die Sensorbefestigungseinrichtung 3.2, selbiges gilt für die Sensorbefestigungseinrichtung 3.1, als Sensorring ausgeführt ist.

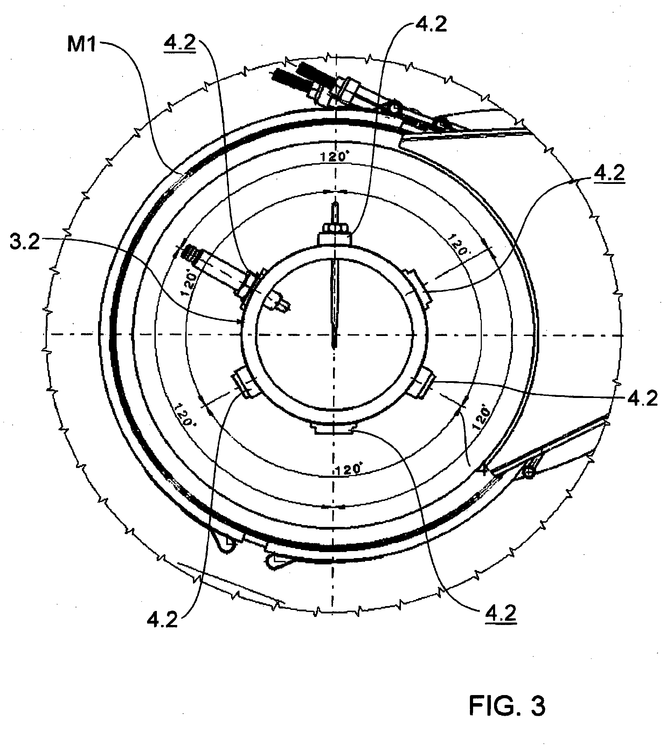

Figur 3 zeigt eine Frontalansicht auf die Sensorbefestigungseinrichtung 3.2 am Ausgangsabschnitt 2. Aus Figur 3 wird insbesondere ersichtlich, dass die Sensorbefestigungseinrichtung 3.2 drei Sensorbefestigungsmittel 4.2 für eine erste Sensor-Art und drei Sensorbefestigungsmittel 4.2 für eine zweite Sensor-Art umfasst.

Die Sensorbefestigungsmittel 4.2 für die erste Sensor-Art sind in Umfangsrichtung um 120° voneinander beabstandet. Die Sensorbefestigungsmittel 4.2 für die zweite Sensor-Art sind in Umfangsrichtung ebenfalls um 120° voneinander beabstandet. Die Sensorbefestigungsmittel 4.2 für die erste Sensor-Art und die Sensorbefestigungsmittel 4.2 für die zweite Sensor-Art sind um 60° in Umfangsrichtung voneinander beabstandet.

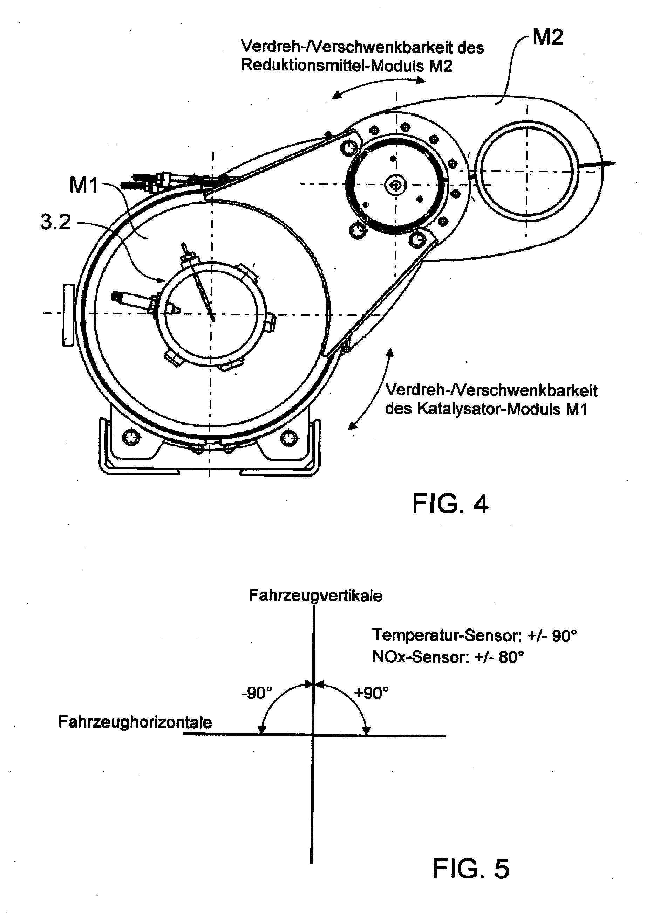

Figur 4 zeigt eine Frontalansicht auf das Abgasnachbehandlungssystem A der Figuren 1 bis 3. Die in Figur 4 gezeigten Doppelpfeile illustrieren Bewegungsfreiheitsgrade, insbesondere Verdreh- oder Verschwenkfreiheitsgrade des Katalysator-Moduls M1 und des Reduktionsmittel-Moduls M2. Daraus folgt, dass der Montagewinkel zwischen dem Katalysator-Modul M1 und dem Reduktionsmittel-Modul M2 veränderbar ist, wodurch das Abgasnachbehandlungssystem A an unterschiedliche Einbauräume und/oder unterschiedliche Einbaulagen angepasst werden kann.

Figur 5 dient der Veranschaulichung gewünschter oder gemäß Einbaurichtlinien oder Herstellervorgaben zulässiger Einbauwinkel für Temperatur-Sensoren und NOx-Sensoren. Temperatursensoren dürfen sich normalerweise in einem Winkelbereich von +/- 90° zur Fahrzeugvertikalen erstrecken, während sich NOx-Sensoren normalerweise in einem Winkelbereich von +/- 80° zur Fahrzeugvertikalen erstrecken dürfen.

Dadurch, dass mittels den Sensorbefestigungsmitteln 4.1, 4.2 Abgassensoren an unterschiedlichen Winkelpositionen montierbar sind oder mit anderen Worten die Sensorbefestigungsmittel 4.1, 4.2 winkelbezogen unterschiedliche Befestigungsoptionen für die Abgassensoren bereitstellen, kann gewährleistet werden, dass gewünschte oder Sensorpositionierungen eingehalten werden. Dadurch kann vor allem Korrosion durch Kondensateinlagerung an oder in den Abgassensoren vermieden werden.

Das Abgasnachbehandlungssystem A, das zumindest ein Katalysator-Modul M1 umfasst, kann somit in beliebigen Lagen verbaut werden, da mit der zumindest einen Sensorbefestigungseinrichtung 3.1, 3.2 unabhängig von der Einbaulage des Abgasnachbehandlungssystems A Einbaurichtlinien, Herstellervorgaben oder schlicht Einbauwünsche in Bezug auf Abgassensoren eingehalten werden können, weil pro Abgassensor insbesondere 3 mögliche Festmachpositionen vorgesehen sind, wobei nach dem Einbau des Abgasnachbehandlungssystems A in Abhängigkeit von der Einbaulage eine dann geeignete Festmachpositionen zur Befestigung des Abgassensors ausgewählt werden kann.

Zu erwähnen ist, dass das Abgas-Modul M1 nicht nur als SCR-Katalysator-Modul ausgeführt sein kann, sondern alternativ oder ergänzend zur Abgasnachbehandlung insbesondere einen Partikel-Filter und/oder einen anderen Katalysator, z. B. einen Oxidationskatalysator umfassen kann. Im Rahmen der Erfindung wird somit mit " Abgasnachbehandlung" vorzugsweise eine Katalysator-basierte Abgasnachbehandlung und/oder eine Filter-basierte Abgasnachbehandlung umfasst.

Die Erfindung ist nicht auf die oben beschriebenen bevorzugten Ausführungsformen beschränkt. Vielmehr ist eine Vielzahl von Varianten und Abwandlungen möglich, die in den Schutzbereich fallen, der von den Ansprüchen definiert wird.

### Bezugszeichenliste

- 1: Eingangsabschnitt
- 2: Ausgangsabschnitt
- 3.1: Sensorbefestigungseinrichtung
- 3.2: Sensorbefestigungseinrichtung
- 4.1: Befestigungsmittel zur Sensorbefestigung
- 4.2: Befestigungsmittel zur Sensorbefestigung
- A: Abgasnachbehandlungssystem
- M1: Abgas-Modul
- M2: Reduktionsmittel-Modul
- M2.1: Reduktionsmittel-Zufuhr/Abgabe-Einrichtung
- M2.2: Reduktionsmittel-Misch-Einrichtung (Mischstrecke)

## Patentansprüche

1. Abgasnachbehandlungssystem (A), vorzugsweise modular aufgebautes Abgasnachbehandlungssystem (A), vorzugsweise für ein Fahrzeug oder ein Pumpen- oder Stromaggregat, mit zumindest einem Abgas-Modul (M1), das einen Eingangsabschnitt (1) und einen Ausgangsabschnitt (2) aufweist, wobei zumindest eine Sensorbefestigungseinrichtung (3.1, 3.2) vorgesehen ist, die zumindest zwei, vorzugsweise zumindest drei, voneinander beabstandete Befestigungsmittel (4.1, 4.2) zur Abgassensor-Befestigung umfasst, wobei die Sensorbefestigungseinrichtung (3.1, 3.2) ein ringförmiges Grundelement umfasst, an dessen Umfangsfläche die Befestigungsmittel (4.1, 4.2) ausgebildet sind, **dadurch gekennzeichnet, dass** die Sensorbefestigungseinrichtung (3.1, 3.2) an dem Eingangsabschnitt (1) und/oder dem Ausgangsabschnitt (2) angeordnet ist.

2. Abgasnachbehandlungssystem (A) nach Anspruch 1, **dadurch gekennzeichnet, dass** die Befestigungsmittel (4.1, 4.2) in Umfangsrichtung oder winkelmäßig voneinander beabstandet sind, vorzugsweise gleichmäßig.

3. Abgasnachbehandlungssystem (A) nach Anspruch 2, **dadurch gekennzeichnet, dass** die Befestigungsmittel (4.1, 4.2) um 60° +/-15° und/oder 120° +/- 15° voneinander beabstandet sind.

4. Abgasnachbehandlungssystem (A) nach einem der vorhergehenden Ansprüche, **dadurch gekennzeichnet, dass** die Befestigungsmittel (4.1, 4.2) eine Durchlassöffnung zur Verfügung stellen, über die eine Abgaserfassung mittels eines Abgassensors ermöglicht wird.

5. Abgasnachbehandlungssystem (A) nach einem der vorhergehenden Ansprüche, **dadurch gekennzeichnet, dass** die Befestigungsmittel (4.1, 4.2) Sensorbefestigungsstutzen umfassen.

6. Abgasnachbehandlungssystem (A) nach einem der vorhergehenden Ansprüche, **dadurch gekennzeichnet, dass** die Befestigungsmittel (4.1, 4.2) zum Anschrauben eines Abgassensors ausgeführt sind.

7. Abgasnachbehandlungssystem (A) nach einem der vorhergehenden Ansprüche, **dadurch gekennzeichnet, dass** eine Sensorbefestigungseinrichtung (3.1) zwischen dem Abgas-Modul (M1) und einem Reduktionsmittel-Modul (M2) angeordnet ist.

8. Abgasnachbehandlungssystem (A) nach einem der vorhergehenden Ansprüche, **dadurch gekennzeichnet, dass** die Sensorbefestigungseinrichtung (3.1, 3.2) zumindest einen Temperatursensor und/oder zumindest einen NOx-Sensor aufweist.

9. Abgasnachbehandlungssystem (A) nach einem der vorhergehenden Ansprüche, **dadurch gekennzeichnet, dass** das Abgas-Modul (M1) zumindest eines von folgenden umfasst:
- einen Katalysator,
- einen SCR-Katalysator, vorzugsweise mit Sperrkatalysator,
- einen Oxidations-Katalysator,
- einen Partikel-Filter, vorzugsweise einen Diesel-Partikel-Filter.

10. Fahrzeug, mit einem Abgasnachbehandlungssystem (A) nach einem der vorhergehenden Ansprüche.

## Claims

1. Exhaust-gas aftertreatment system (A), preferably exhaust-gas aftertreatment system (A) of modular construction, preferably for a vehicle or a pump or generator unit, having at least one exhaust-gas module (M1) which has an inlet section (1) and an outlet section (2), wherein at least one sensor fastening device (3.1, 3.2) is provided which comprises at least two, preferably at least three, spaced-apart fastening means (4.1, 4.2) for exhaust-gas sensor fastening, wherein the sensor fastening device (3.1, 3.2) comprises an annular base element, on the circumferential surface of which the fastening means (4.1, 4.2) are formed, **characterized in that** the sensor fastening device (3.1, 3.2) is arranged at the inlet section (1) and/or at the outlet section (2).

2. Exhaust-gas aftertreatment system (A) according to Claim 1, **characterized in that** the fastening means (4.1, 4.2) are spaced apart from one another, preferably uniformly, in a circumferential direction or angularly.

3. Exhaust-gas aftertreatment system (A) according to Claim 2, **characterized in that** the fastening means (4.1, 4.2) are spaced apart from one another by 60° +/-15° and/or 120° +/-15°.

4. Exhaust-gas aftertreatment system (A) according to one of the preceding claims, **characterized in that** the fastening means (4.1, 4.2) provide a passage opening that permits exhaust-gas measurement by means of an exhaust-gas sensor.

5. Exhaust-gas aftertreatment system (A) according to one of the preceding claims, **characterized in that** the fastening means (4.1, 4.2) comprise sensor fastening connectors.

6. Exhaust-gas aftertreatment system (A) according to one of the preceding claims, **characterized in that** the fastening means (4.1, 4.2) are designed for an exhaust-gas sensor to be screwed on.

7. Exhaust-gas aftertreatment system (A) according to one of the preceding claims, **characterized in that** one sensor fastening device (3.1) is arranged between the exhaust-gas module (M1) and a reducing agent module (M2).

8. Exhaust-gas aftertreatment system (A) according to one of the preceding claims, **characterized in that** the sensor fastening device (3.1, 3.2) has at least one temperature sensor and/or at least one NOx sensor.

9. Exhaust-gas aftertreatment system (A) according to one of the preceding claims, **characterized in that** the exhaust-gas module (M1) comprises at least one of the following:
- a catalytic converter,
- an SCR catalytic converter, preferably with barrier catalytic converter,
- an oxidation catalytic converter,
- a particle filter, preferably a diesel particle filter.

10. Vehicle having an exhaust-gas aftertreatment system (A) according to one of the preceding claims.

## Revendications

1. Système de post-traitement de gaz d'échappement (A), de préférence système de post-traitement de gaz d'échappement à structure modulaire (A), de préférence pour un véhicule ou un groupe motopompe ou un groupe électrogène, avec au moins un module de gaz d'échappement (M1), qui présente une partie d'entrée (1) et une partie de sortie (2), dans lequel il est prévu au moins un dispositif de fixation de capteurs (3.1, 3.2), qui comprend au moins deux, de préférence au moins trois, moyens de fixation (4.1, 4.2) espacés les uns des autres pour la fixation de capteurs de gaz d'échappement, le dispositif de fixation de capteurs (3.1, 3.2) comprenant un élément de base annulaire au niveau de la surface périphérique duquel sont réalisés les moyens de fixation (4.1, 4.2), **caractérisé en ce que** le dispositif de fixation de capteurs (3.1, 3.2) est disposé à la partie d'entrée (1) et/ou à la partie de sortie (2).

2. Système de post-traitement de gaz d'échappement (A) selon la revendication 1, **caractérisé en ce que** les moyens de fixation (4.1, 4.2) sont espacés les uns des autres dans la direction périphérique ou angulairement, de préférence uniformément.

3. Système de post-traitement de gaz d'échappement (A) selon la revendication 2, **caractérisé en ce que** les moyens de fixation (4.1, 4.2) sont espacés les uns des autres de 60° ± 15° et/ou de 120° ± 15°.

4. Système de post-traitement de gaz d'échappement (A) selon l'une quelconque des revendications précédentes, **caractérisé en ce que** les moyens de fixation (4.1, 4.2) fournissent une ouverture de passage par le biais de laquelle une détection de gaz d'échappement peut être effectuée au moyen d'un capteur de gaz d'échappement.

5. Système de post-traitement de gaz d'échappement (A) selon l'une quelconque des revendications précédentes, **caractérisé en ce que** les moyens de fixation (4.1, 4.2) comprennent des tubulures de fixation de capteurs.

6. Système de post-traitement de gaz d'échappement (A) selon l'une quelconque des revendications précédentes, **caractérisé en ce que** les moyens de fixation (4.1, 4.2) sont configurés pour le vissage d'un capteur de gaz d'échappement.

7. Système de post-traitement de gaz d'échappement (A) selon l'une quelconque des revendications précédentes, **caractérisé en ce qu'**un dispositif de fixation de capteurs (3.1) est disposé entre le module de gaz d'échappement (M1) et un module d'agents de réduction (M2).

8. Système de post-traitement de gaz d'échappement (A) selon l'une quelconque des revendications précédentes, **caractérisé en ce que** le dispositif de fixation de capteurs (3.1, 3.2) présente au moins un capteur de température et/ou au moins un détecteur de NOx.

9. Système de post-traitement de gaz d'échappement (A) selon l'une quelconque des revendications précédentes, **caractérisé en ce que** le module de gaz d'échappement (M1) comprend au moins un des composants suivants:
- un catalyseur,
- un catalyseur SCR, de préférence un catalyseur piège,
- un catalyseur d'oxydation,
- un filtre à particules, de préférence un filtre à particules Diesel.

10. Véhicule, doté d'un système de post-traitement de gaz d'échappement (A) selon l'une quelconque des revendications précédentes.
